Europäisches Patentamt

European Patent Office

Office européen des brevets

(11) Veröffentlichungsnummer: **0 171 004**
**A2**

# EUROPÄISCHE PATENTANMELDUNG

(21) Anmeldenummer: 85109423.5

(22) Anmeldetag: 26.07.85

(51) Int. Cl.⁴: **F 16 K 5/06**, F 16 K 5/10

(30) Priorität: 09.08.84 DK 3846/84

(43) Veröffentlichungstag der Anmeldung: **12.02.86**
**Patentblatt 86/7**

(84) Benannte Vertragsstaaten: **AT BE CH DE FR GB IT LI LU NL SE**

(71) Anmelder: **BROEN ARMATUR A/S, Skovvej 30, DK-5610 Assens (DK)**

(72) Erfinder: **Rasmussen, Helge Kjaer, Th. Bangsvej 11, DK-5620 Glamsbjerg (DK)**
Erfinder: **Ornstedt, Björn, Hjortestlen 44, DK-2860 Soborg (DK)**

(74) Vertreter: **Lehmann, Klaus, Dipl.-Ing. et al, Patentanwälte Schroeter & Lehmann Postfach 70 17 47 Lipowskystrasse 10, D-8000 München 70 (DE)**

(54) Ventil zum Regulieren von Teilströmen in zwel oder mehreren Rohrleitungen.

(57) Ein Ventil weist ein Gehäuse (1) mit einem darin angeord-neten Ventilkörper (5) auf. Das Ventil dient zum Regulieren von Teilströmen, die durch zwei oder mehrere Rohrleitungen strö-men. Der Ventilkörper ist als ein Kugelventilkörper (6) mit einer Durchtrittspassage (7) ausgebildet. Quer in der Durchtritts-passage (7) ist ein Drosselorgan (31) vorgesehen, dessen Ein-dringtiefe in die Durchtrittspassage (7) einstellbar ist. Das Ven-til ist baulich einfach und kann geöffnet und gesperrt werden, ohne daß das Drosselorgan (31) erneut eingestellt werden muß.

## Ventil zum Regulieren von Teilströmen in zwei oder mehreren Rohrleitungen

Die Erfindung betrifft ein Ventil zum Regulieren von durch zwei oder mehrere Rohrleitungen strömenden Teilströmen, welches Ventil ein Gehäuse mit einem darin angeordneten Ventilkörper aufweist.

Die bisher bekannten Ventile dieser Art bestehen aus gewöhnlichen Sitzventilen, die in die betreffenden Rohrleitungen eingeschaltet und in solcher Weise eingestellt werden, dass die erwünschte Verteilung der durch die betreffenden Rohrleitungen strömenden Teilströme erzielt wird. Als Beispiel der Verwendung derartiger Ventile können verhältnismässig grosse Zentralheizungsanlagen erwähnt werden, bei denen von einem Kessel oder einem Wärmetauscher oder einer sonstigen Wärmequelle eine Hauptrohrleitung ausgeht, die sich zu mehreren Heizkörpergruppen verzweigt. In diesen Zweigleitungen werden Ventile der genannten Art vorgesehen, um zu sichern, dass zu den betreffenden Heizkörpergruppen, zu denen die Zweigleitungen führen, jeweils die vorbestimmten Teilströmen zugeführt werden, d.h. dass die Teilströme in den einzelnen Zweigrohren entsprechend den Heizflächen der betreffenden Heizkörpergruppen proportioniert werden.

Die Verwendung von gewöhnlichen Sitzventilen für den im vorstehenden beschriebenen Zweck ist insoweit unzweckmässig als, falls die betreffende Rohrleitung abgesperrt werden soll, und die Absperrung durch das betreffende Sitzventil vorgenommen wird, das Ventil erneut eingestellt werden muss, was mit einem hohen Zeitaufwand verbunden sein kann.

Das Ventil nach der vorliegenden Erfindung ist dadurch gekennzeichnet, dass der Ventilkörper als ein Kugelventilkörper mit einer Durchtrittspassage ausgebildet ist, und dass quer in der Durchtrittspassage ein Drosselorgan vorgesehen ist, dessen Eindringtiefe in die Durchtrittspassage einstellbar ist. Dadurch wird ein einfaches und leicht einstellbares Ventil der genannten Art erzielt, welches mit grosser Genauigkeit, nämlich je nachdem wie weit das Drosselorgan in die Durchtrittspassage des Ventilkörpers ragt, eingestellt werden kann, und diese Einstellung wird beim Öffnen und Absperren des Kugelventils nicht verlorengehen.

Eine vorteilhafte Ausführungsform des Ventils nach der Erfindung ist dadurch gekennzeichnet, dass das Drosselorgan durch einen Stab gebildet wird, der am einen zum Eingreifen in die Durchtrittspassage vorgesehenen Ende einen kreisrunden Querschnitt hat, und am anderen Ende einen mit einer Gradeinteilung versehenen Zapfen aufweist und zwischen seinen beiden Enden mit einem Gewinde zum einstellbaren Einschrauben in einen Teil des Ventilgehäuses versehen ist. Dadurch wird erzielt, dass unmittelbar festgestellt werden kann, wie weit das Drosselorgan in die Durchtrittspassage einragt.

Eine weitere vorteilhafte Ausführungsform des Ventils nach der Erfindung ist dadurch gekennzeichnet, dass die Durchtrittspassage mit zwei einander gegenüber angeordneten parallelen Seitenflächen ausgebildet ist, und dass der Abstand dieser Seitenflächen voneinander etwa dem Durchmesser des zum Eingreifen in die Durchtrittspassage vorgesehenen kreisrunden Endteils des Drosselorgans entspricht. Dadurch wird erzielt, dass die Durchtrittsfläche proportional zu einer grösseren oder geringeren Eindringtiefe des Drosselorgans in die Durchtrittspassage eingeengt bzw. erweitert wird.

Eine weitere vorteilhafte Ausführungsform des Ventils nach der Erfindung ist dadurch gekennzeichnet, dass die Durchtrittspassage ausser durch die genannten zwei Seitenflächen auch durch im wesentlichen kegelförmige Flächen begrenzt wird, deren grösster Durchmesser etwa dem Durchmesser zweier Dichtungsringe entspricht, zwischen denen der Kugelventilkörper angeordnet ist. Dadurch wird bei der offenen Stellung des Ventils eine vorteilhafte Strömung durch das Ventil erzielt, indem die durchströmende Menge zunächst durch den kegelförmigen Einlauf eingeengt wird, um darauf zwischen die zueinander parallelen Seitenflächen zu passieren und dann über das konische Auslaufende der Durchtrittspassage auszuströmen, wodurch Wirbelbildungen weitgehend vermieden werden, und durch eine grössere oder geringeren Eindringtiefe des Drosselorgans in die Durchtrittspassage eine wohldefinierte Drosselwirkung erzielt werden kann.

Eine weitere vorteilhafte Ausführungsform des Ventils nach der Erfindung ist dadurch gekennzeichnet, dass derjenige Teil des Ventilgehäuses, in den das Drosselorgan eingeschraubt ist, durch eine Büchse gebildet wird, die im Ventilgehäuse drehbar gelagert, (bei 22) gegen dieses sowie (bei 38) gegen das kreisrunde Ende des Drosselorgans abgedichtet ist und zum Öffnen und Absperren des Kugelventils mit einem Handgriff zum gleichzeitigen Drehen des Ventilkörpers und des Drosselorgans verbunden ist. Dadurch wird eine einfache Ausführungsform des erfindungsgemässen Ventils erzielt.

Eine weitere vorteilhafte Ausführungsform des Ventils nach der Erfindung ist dadurch gekennzeichnet, dass der Handgriff dadurch mit der Büchse verbunden ist, dass der Handgriff mit einem Hohlraum zur Aufnahme eines aus dem Ventilgehäuse ragenden Halsteils der Büchse ausgebildet ist, wobei der mit der Gradeinteilung versehene Zapfen des Drosselorgans aus diesem Halsteil herausragt. Dadurch wird erzielt, dass die Gradeinteilung des Drosselorgans wirksam gegen Verschmutzung geschützt wird, so dass die leichte Lesbarkeit der Gradeinteilung erhalten wird, und das Drosselorgan nach Entfernung des Handgriffes leicht einstellbar ist.

Eine weitere vorteilhafte Ausführungsform des Ventils nach der Erfindung ist dadurch gekennzeichnet, dass der Kugelventilkörper und die Büchse durch eine Kerben-Rückenverbindung miteinander gekuppelt sind. Dadurch wird eine einfache Montage des Ventils erzielt.

Eine weitere vorteilhafte Ausführungsform des Ventils nach der Erfindung ist dadurch gekennzeichnet, dass im Ventilgehäuse und seitlich des Kugelventils eine in die Durchtrittspassage des Ventilgehäuses mündende Wandbohrung vorgesehen ist, in die ein Absperrventil und eine Aufnahme für ein Messinstrument zum Messen der durch das Ventil strömenden Menge eingesetzt sind. Dadurch wird erzielt, dass beim erfindungsgemässen Ventil die Messung anhand welcher das Drosselorgan eingestellt wird, d.h. die Messung der durch das Ventil strömenden Menge, unmittelbar am Ventil selbst erfolgen kann, was die Einstellung des Drosselorgans erleichtert.

Gemäss einer weiteren vorteilhaften Ausführungsform des Ventils nach der Erfindung wird das Absperrventil durch ein Kugelventil gebildet. Ein derartiges Ventil gestattet nämlich in seiner offenen Stellung, dass das Messinstrument durch die Durchtrittsbohrung des Kugelventils und die Wandbohrung, in der das Kugelventil angeordnet ist, hindurchgeführt wird.

Die Erfindung wird im folgenden anhand der Zeichnung näher erläutert. Es zeigt:

Fig. 1     einen Längsschnitt durch eine Ausführungsform des Ventils nach der Erfindung,

Fig. 2     das Ventil der Fig. 1 gesehen von der linken Seite der Fig. 1, und

Fig. 3     in verkleinertem Massstab einen Schnitt nach der Linie III-III der Fig. 1.

In der Zeichnung bezeichnet 1 das Gehäuse des dargestellten Ventils. Das Gehäuse ist mit zwei Anschlussstutzen 2 und 3 zum Einschalten des Ventils in eine Rohrleitung versehen. Bei der in der Zeichnung dargestellten Ausführungsform sind die zwei Stutzen 1 und 2 mit Innengewinden ausgebildet, aber es versteht sich, dass jede beliebige andere Art Gewinde vorgesehen sein kann, und ferner kann das Ventilgehäuse 1 mit Stutzen zum Einlöten oder Einschweissen von Rohrstücken, die zu der betreffenden Rohrleitung gehören, versehen sein.

Im Ventilgehäuse ist zwischen den beiden Stutzen 2 und 3 eine Durchtrittspassage 4 ausgebildet, die durch ein im Ganzen mit 5 bezeichnetes Kugelventil abgesperrt werden kann. Das Kugelventil besteht aus einem mit einer Durchtrittspassage 7 ausgebildeten Kugelventilkörper 6, der im Ventilgehäuse 1 zwischen einer in eine Aussparung 9 eingesetzten Dichtung 8 und einem Halter 10 angeordnet ist, der beim dargestellten Ausführungsbeispiel aus zwei Teilen besteht, nämlich aus einem mit Aussengewinde ausgebildeten Metallring, der in das Innengewinde des Stutzens 2 eingeschraubt ist, und aus einem Teflondichtung 11, die in eine Aussparung 12 des Metallrings 10 eingesetzt ist.

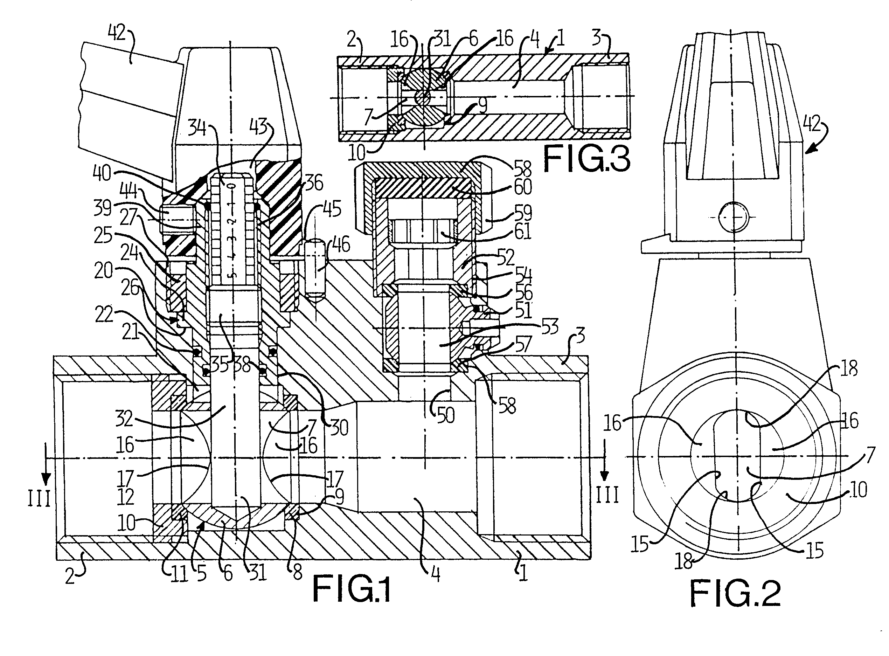

Die Durchtrittspassage 7 wird, wie am besten aus Fig. 2 ersichtlich, über einen Teil ihrer Länge durch zwei einander gegenüber angeordnete parallele Seitenflächen 15,15 begrenzt, und die Stirnseiten der Durchtrittspassage werden durch zwei konischen Flächen 16,16 gebildet. Die Schnittkurven zwischen den parallelen Seitenflächen 15,15 und den beiden konischen Flächen 16,16 sind in Fig. 1 mit 17,17 bezeichnet. Der grösste Durchmesser der beiden konischen Flächen 16,16 entspricht im wesentlichen dem Innendurchmesser der Dichtungen 8 und 11. Die beiden Seitenflächen 15,15 sind oben und unten durch halbkreisförmige Flächen 18,18 verbunden, die die obere und untere Begrenzung der Durchtrittspassage 7 bilden.

Der Kugelventilkörper 6 ist an seinem in Fig. 1 nach oben weisenden Teil durch eine Kerbenverbindung 21 mit einer Büchse 20 verbunden, und der Kugelventilkörper 6 und die Büchse 20 sind somit drehfest miteinander verbunden. Die Büchse 20 ist drehbar in einer Bohrung 30 des Ventilgehäuses angeordnet und durch einen O-Ring 22 gegen diese Bohrung abgedichtet. Die Büchse ist mit einer Schulter 24 ausgebildet, die durch einen Haltering 25 gegen einen Absatz 26 des Ventilgehäuses 1 gedrückt wird. Der Haltering 25 ist in eine Bohrung 27 mit Innengewinde eingeschraubt.

Ein Drosselorgan 31, dessen eines Endteil 32 mit kreisrundem Querschnitt ausgebildet ist, und mehr oder weniger weit in die Durchtrittspassage 7 des Kugelventilkörpers 6 hineinragen kann, ist verschiebbar in der Büchse gelagert. Zu diesem Zweck ist der Kugelventilkörper 6 mit einer Bohrung versehen, die sich einerseits durch den oberen Teil des Kugelventilkörpers 6 hindurch und andererseits etwas in den unteren Teil des Kugelventilkörpers 6 erstreckt, und also die halbkreisförmigen Flächen 18,18 durchbricht. Der Durchmesser des Endteils 32 entspricht im wesentlichen dem Abstand zwischen den Seitenflächen 15, vgl. Fig. 2, und folglich wird der Endteil 32 in seiner in Fig. 1 dargestellten Stellung die Durchtrittspassage 7 völlig absperren.

Der andere Endteil 34 des Drosselorgans 31 ist als ein Zapfen mit einer Gradeinteilung ausgebildet, die in der Zeichnung durch die Zahlreihe "0,1,2,3,4,5" angedeutet ist.

Zwischen dem Endteil 32 und dem Zapfen 34 ist das Drosselorgan 31 mit einem seitlich über die Umkreisfläche des Endteils vorstehenden Gewinde 35 ausgebildet, welches in ein Innengewinde 36 der Büchse 20 eingeschraubt ist. Der Zapfen 34 ist am oberen Ende mit einem nicht dargestellten Loch mit eckigem Innenumkreis für einen Schlüssel ausgebildet, so dass das Drosselorgan 31 durch Drehen axial zur Büchse bewegbar ist, und somit in eine mehr oder weniger in die Durchtrittspassage 7 hineinragende Stellung gebracht werden kann.

Der Endteil 32 des Drosselorgans 31 ist durch einen O-Ring 38 gegen die Innenseite der Büchse 20 abgedichtet, und das obere Ende der Büchse ist als ein von der Oberseite des Ventilgehäuses 1 abstehender Halsteil 39 ausgebildet. Am oberen Ende dieses Halsteils ist ein Haltering 40 angeordnet, um zu verhindern, dass das Drosselorgan ganz aus der Büchse herausgeschraubt werden kann.

Die Stellung des Drosselorgans 31 kann durch Ablesung der Gradeinteilung des Zapfens 34 am oberen Ende des Halsteils 39 festgestellt werden.

Das Ventil ist mit einem Handgriff 42 versehen, dessen Griffhebel in der Zeichnung abgebrochen dargestellt ist. Der Handgriff ist mit einem Hohlraum 43 ausgebildet, dessen äusserer Teil, wie aus der Fig. 1 ersichtlich, den herausragenden Halsteil 39 umgreift und durch eine Feststellschraube 44 auf diesem gesichert ist. Der Hohlraum 43 erstreckt sich so weit in den Handgriff, dass der Hohlraum, wenn sich das Drosselorgan in seiner am weitesten ausgeschraubten Stellung befindet, den Zapfen 34 aufnehmen kann, so dass die Gradeinteilung gegen Verschmutzung gut geschützt ist.

Der Handgriff ist mit einem seitlichen Vorsprung 45 versehen, der bei der in Fig. 1 dargestellten offenen Stellung des Ventils mit einem Anschlagstift 46 zusammenwirkt. Ein entsprechender Anschlagstift ist in solcher Weise im Gehäuse 1 angeordnet, dass er bei der Sperrstellung des Ventils einen Anschlag für den Handgriff 42 bildet.

Das Ventilgehäuse 1 ist seitlich des Kugelventils 5 mit einer Wandbohrung 50 versehen, in die ein Absperrventil 51 und eine Aufnahme 52 für ein Messinstrument eingesetzt sind. Das Ventil 51 wird durch ein Kugelventil gebildet, dessen Durchtrittspassage 53 in der offenen Stellung des Ventils die Einführung des Messinstrumentes gestattet. Die Aufnahme 52 ist in ein Gewindeloch 54 des Ventilgehäuses eingeschraubt, und das untere Ende der Aufnahme dient zum Festhalten des Kugelventils 51, indem zwischen diesem unteren Ende der Aufnahme und dem Kugelventil eine Dichtung 56 vorgesehen ist. Dadurch wird das Kugelventil 51 gegen eine weitere in eine Ausnehmung 58 des Ventilgehäuses eingesetzte Dichtung 57 gedrückt.

Die Aufnahme ist oben durch einen Deckel 58 verschlossen, der mit Schlüsseleingriffsflächen 59 versehen ist, und zwischen dem Deckel und dem oberen Ende der Aufnahme ist eine Dichtung 60 vorgesehen. Die Aufnahme enthält einen Führungsring 61 für das Messinstrument.

Das dargestellte Ventil wirkt wie folgt:

Das Messinstrument wird in die Aufnahme 52 eingesetzt und durch die Durchtrittspassage 53 des Kugelventils 51 geführt, so dass mit dem Messinstrument eine Messung des durch das Ventil strömenden Teilstroms vorgenommen werden kann. Je nach der gewünschten Strömung wird das Drosselorgan 31 in der beschriebenen Weise, nämlich durch Einschrauben des Endteils 32 um einen grösseren oder kleineren Betrag in die Durchtrittspassage 7, eingestellt. Wenn der gewünschte Teilstrom erzielt worden ist, und sich somit das gewünschte Gleichgewicht in dem Rohrnetz eingestellt hat, in welches das betreffende Ventil eingeschaltet ist, wird das Messinstrument entfernt, das Kugelventil 51 geschlossen, und der Deckel 58 aufgesetzt. Der Handgriff 42 wird aufgesetzt und durch die Halteschraube 44 gesichert.

Wie insbesondere aus Fig. 1 und 3 ersichtlich, wird die Durchtrittspassage 4 des Ventilgehäuses weitestgehend ausgenutzt, indem der grösste Durchmesser der konischen Flächen 16 etwa dem Innendurchmesser der beiden Dichtungen 8 und 11 entspricht.

Patentansprüche:

1. Ventil zum Regulieren von durch zwei oder mehrere Rohrleitungen strömenden Teilströmen, welches ein Gehäuse (1) mit einem darin angeordneten Ventilkörper (6) aufweist, dadurch g e - k e n n z e i c h n e t, dass der Ventilkörper als ein Kugelventilkörper (6) mit einer Durchtrittspassage (7) ausgebildet ist, und dass quer in der Durchtrittspassage (7) ein Drosselorgan (31) vorgesehen ist, dessen Eindringtiefe in die Durchtrittspassage (7) einstellbar ist.

2. Ventil nach Anspruch 1, dadurch g e k e n n z e i c h - n e t, dass das Drosselorgan (31) durch einen Stab gebildet wird, der am einen zum Eingreifen in die Durchtrittspassage (7) vorgesehenen Ende (32) einen kreisrunden Querschnitt hat, und am anderen Ende einen mit einer Gradeinteilung versehenen Zapfen (34) aufweist und zwischen seinen beiden Enden mit einem Gewinde (35) zum einstellbaren Einschrauben in einen Teil (20) des Ventilgehäuses versehen ist.

3. Ventil nach Anspruch 1, dadurch g e k e n n z e i c h - n e t, dass die Durchtrittspassage (7) mit zwei einander gegenüber angeordneten parallelen Seitenflächen (15,15) ausgebildet ist, und dass der Abstand dieser Seitenflächen (15,15) voneinander etwa dem Durchmesser des zum Eingreifen in die Durchtrittspassage (7) vorgesehenen kreisrunden Endteils (32) des Drosselorgans (31) entspricht.

4. Ventil nach Anspruch 3, dadurch g e k e n n z e i c h - n e t, dass die Durchtrittspassage (7) ausser durch die genannten zwei Seitenflächen (15,15) auch durch im wesentlichen kegelförmige Flächen (16,16) begrenzt wird, deren grösster Durchmesser etwa dem Durchmesser zweier Dichtungsringe (8,11) entspricht, zwischen denen der Kugelventilkörper (6) angeordnet ist.

5. Ventil nach Anspruch 2, dadurch g e k e n n z e i c h - n e t, dass derjenige Teil des Ventilgehäuses, in den das Drosselorgan (31) eingeschraubt ist, durch eine Büchse (20) gebildet wird, die im Ventilgehäuse (1) drehbar gelagert, (bei 22) gegen dieses sowie (bei 38) gegen das kreisrunde Ende (32) des Drosselorgans (31) abgedichtet ist und zum Öffnen und Absperren des Kugelventils mit einem Handgriff (42) zum gleichzeitigen Drehen des Ventilkörpers (6) und des Drosselorgans (31) verbunden ist.

6. Ventil nach Anspruch 5, dadurch g e k e n n z e i c h -

n e t, dass der Handgriff (42) dadurch mit der Büchse (20) verbunden ist, dass der Handgriff mit einem Hohlraum (43) zur Aufnahme eines aus dem Ventilgehäuse (1) ragenden Halsteils (39) der Büchse (20) ausgebildet ist, wobei der mit der Gradeinteilung versehene Zapfen (34) des Drosselorgans (31) aus diesem Halsteil (39) herausragt.

7. Ventil nach Anspruch 5, dadurch g e k e n n z e i c h - n e t, dass der Kugelventilkörper (6) und die Büchse (20) durch eine Kerbenverbindung (21) miteinander gekuppelt sind.

8. Ventil nach Anspruch 1, dadurch g e k e n n z e i c h - n e t, dass das Ventilgehäuse (1) seitlich des Kugelventils (5) mit einer in die Durchtrittspassage (4) des Ventilgehäuses (1) mündenden Wandbohrung (50) ausgebildet ist, in die ein Absperrventil (51) und eine Aufnahme (52) für ein Messinstrument zum Messen der durch das Ventil strömenden Menge eingesetzt sind.

9. Ventil nach Anspruch 8, dadurch g e k e n n z e i c h - n e t, dass das Absperrventil durch ein Kugelventil (51) gebildet wird.

FIG.3

FIG.1

FIG.2

017 1004